# EUROPEAN PATENT APPLICATION

(11) **EP 4 818 890 A1**
(43) Date of publication of application: **07.10.2026**
(21) Application number: 24896497.5
(22) Date of filing: 26.11.2024
(51) Int. Cl.: G06F 8/658

(54) **SYSTEM FOR UPDATING USER MODEL, DEVICE, AND METHOD**

(30) Priority: 30.11.2023 CN 202311622741
(71) Applicant: Sony Group Corporation, Tokyo 108-0075 (JP)
(72) Inventor: CUI, Tao, Beijing 100027 (CN); BAI, Yingshuang, Beijing 100027 (CN); TONG, Qiang, Beijing 100027 (CN); WU, Songtao, Beijing 100027 (CN); SUN, Chen, Beijing 100027 (CN)
(74) Representative: D Young & Co LLP
(86) International application number: PCT/CN2024/134388
(87) International publication number: WO 2025/113408

(57) **Abstract**

System, device, and method for updating user model are disclosed. In one embodiment, an electronic system may be configured to receive model data characterizing an artificial intelligence model from a model management server, send model difference data characterizing a model difference to the model management server, and receive updated model data from the model management server, the updated model data characterizing an updated version of the artificial intelligence model, the updated version being based at least in part on the model difference data.

## Description

### CLAIM OF PRIORITY

This application claims priority to Chinese patent application with application number 202311622741.9, titled "SYSTEM, DEVICE, AND METHOD FOR UPDATING USER MODEL", filed on November 30, 2023, the entire content of which is incorporated herein by reference.

### TECHNICAL FIELD

This disclosure relates to field of communication, and in particular, to a system, a device, and a method for updating a user model.

### BACKGROUND

Artificial Intelligence (AI) technology is becoming increasingly widespread. A model provider may deploy a trained AI model to a user's device or system for use by the user.

### SUMMARY

The disclosure provides a system, a device, and a method for updating a user model.

One aspect of the disclosure relates to an electronic system, comprising at least one processing unit and at least one storage unit, the at least one storage unit including computer program code, wherein the at least one storage unit and the computer program code are configured to, via the at least one processing unit, cause the electronic system to perform operations of: receiving model data characterizing an artificial intelligence model from a model management server; sending model difference data characterizing a model difference to the model management server; and receiving updated model data from the model management server, the updated model data characterizing an updated version of the artificial intelligence model, the updated version being based at least in part on the model difference data.

Another aspect of the disclosure relates to a method, comprising: receiving model data characterizing an artificial intelligence model from a model management server; sending model difference data characterizing a model difference to the model management server; and receiving updated model data from the model management server, the updated model data characterizing an updated version of the artificial intelligence model, the updated version being based at least in part on the model difference data.

One aspect of the disclosure relates to an electronic system, comprising at least one processing unit and at least one storage unit, the at least one storage unit including computer program code, wherein the at least one storage unit and the computer program code are configured to, via the at least one processing unit, cause the electronic system to perform operations of: sending model data defining an artificial intelligence model to a user system; receiving model difference data characterizing a model difference from the user system; generating an updated version of the artificial intelligence model based at least in part on the model difference data; and sending the updated model data to the user system, the updated model data characterizing the updated version of the artificial intelligence model.

Another aspect of the disclosure relates to a method, comprising: sending model data defining an artificial intelligence model to a user system; receiving model difference data characterizing a model difference from the user system; generating an updated version of the artificial intelligence model based at least in part on the model difference data; and sending the updated model data to the user system, the updated model data characterizing the updated version of the artificial intelligence model.

Another aspect of the disclosure relates to a computer-readable storage medium having one or more instructions stored thereon, which, when executed by one or more processing circuits of an electronic device, cause the electronic device to perform any method as described in the disclosure.

Another aspect of the disclosure relates to a computer program product comprising a computer program, which, when executed by a processor, implements any method as described in present disclosure.

Another aspect of the disclosure relates to an apparatus comprising means for performing any method as described in the disclosure.

### BRIEF DESCRIPTION OF THE DRAWINGS

The above and other purposes and advantages of the disclosure will be further described below in conjunction with specific embodiments and with reference to the accompanying drawings. In the drawings, same or corresponding technical features or components will be denoted by same or corresponding reference numerals.
FIG. 1 illustrates a schematic diagram of an architecture according to an embodiment of the disclosure.
FIG. 2 illustrates an exemplary block diagram of an electronic device according to some embodiments of the disclosure.
FIG. 3 illustrates an exemplary block diagram of an electronic device according to some embodiments of the disclosure.
FIG. 4 illustrates a flowchart of a method for updating a user model according to some embodiments of the disclosure.
FIG. 5 illustrates a flowchart of a method for updating a user model according to some embodiments of the disclosure.
FIG. 6 illustrates an application of the technology according to some embodiments of the disclosure in a cellular network.
FIG. 7 illustrates a conventional beam selection process.
FIG. 8 illustrates an example of using a user model to predict an optimal beam pair according to some embodiments of the disclosure.
FIG. 9 illustrates another example of using a user model to predict an optimal beam pair according to some embodiments of the disclosure.
FIG. 10 illustrates an application of the technology according to some embodiments of the disclosure in the Internet of Vehicles.
FIG. 11 is a block diagram showing a first example of an exemplary configuration of a gNB to which the technology of the disclosure may be applied.
FIG. 12 is a block diagram showing a second example of an exemplary configuration of a gNB to which the technology of the disclosure may be applied.
FIG. 13 a block diagram showing an example of an exemplary configuration of a communication device to which the technology of the disclosure may be applied.
FIG. 14 is a block diagram showing an example of an exemplary configuration of a vehicle navigation device to which the technology of the disclosure may be applied.

While the embodiments described in the disclosure may be susceptible to various modifications and alternative forms, specific embodiments thereof are shown by way of example in the drawings and described in detail herein. It should be understood that the drawings and detailed description are not intended to limit the embodiments to the disclosed particular forms, but on the contrary, the intention is to cover all modifications, equivalents and alternatives that fall within the spirit and scope of the claims.

### DETAILED DESCRIPTION

Exemplary embodiments of the disclosure will be described below with reference to the accompanying drawings. For clarity and conciseness, not all features of the embodiments are described in the specification. It should be understood, however, that many implementation-specific settings must be made in implementing an embodiment in order to achieve the developer's specific goals, for example, to meet those constraints associated with the device and business, and that these constraints may vary from one implementation to another. Moreover, it should also be understood that development work, while potentially very complex and time-consuming, would only be a routine undertaking for those skilled in the art having the benefit of the disclosure.

Here, it should also be noted that, in order to avoid obscuring the disclosure with unnecessary details, only the processing steps and/or device structures that are closely related to at least the solution according to the disclosure are shown in the drawings, while other details that are of little relevance to the disclosure are omitted.

As time goes on, artificial intelligence has been applied across various industries. From innovative applications in the healthcare industry to intelligent solutions in the financial services sector, and further to efficient optimization in manufacturing and agriculture, the popularization of artificial intelligence has become indispensable. At the current stage, enterprises can not only provide products and services to customers but also integrate customized artificial intelligence models therein to further enhance functions and performance of the products and services.

For example, in the field of communications, artificial intelligence is changing the way communication networks are managed and optimized. By analyzing large amounts of network data, artificial intelligence may predict network congestion, optimize bandwidth allocation, and even detect potential network failures in advance. This helps provide more stable and efficient communication services, thereby meeting the ever-growing demand for connectivity in modern society.

For another example, in the field of automatic driving, artificial intelligence provides vehicles with capabilities of intelligent decision-making and environmental perception. Through technologies such as deep learning and perception, vehicles can identify roads, vehicles, and pedestrians, thereby realizing autonomous driving operations. This not only improves driving safety but may also improve traffic smoothness and energy utilization.

The communication field and the automatic driving field are merely examples of fields where artificial intelligence may be applied. With the continuous advancement of artificial intelligence technology, application fields of this technology will continue to expand, bringing more innovations and transformations to various industries. However, accompanying issues such as privacy, security, and ethics have also attracted widespread attention. It is desirable to improve performance of artificial intelligence models while complying with privacy, security, and ethical requirements.

Typically, an artificial intelligence model is generated and supplied by a model provider. The model provider may be a provider of a product or a service, or may be associated with the provider of the product or the service. The model provider may train the artificial intelligence model based on a training dataset. The trained artificial intelligence model may be deployed to a user's device or system for use by the user. Such a deployed artificial intelligence model is referred to herein as a user model.

The training dataset used by the model provider to train the user model is usually limited. The training dataset does not necessarily optimally match an actual environment of the user that is using the user model. Therefore, the user may not be able to obtain the optimal performance of the user model in the actual environment. In some scenarios, it is desirable to change (e.g., adjust or update) the deployed user model according to the actual environment of the user.

However, it is inappropriate to leave entirely to the user to implement changes to the user model. Direct changes to the user model by the user may degrade performance of the model. For example, if a user autonomously changes a user model being used for automatic driving, the changed user model may lead to accidents. If a user autonomously changes a user model being used for a communication network, the changed user model may lead to a degradation in communication quality. The responsibility for such degradation would be unreasonably borne by the user, while the model provider might evade any consequences caused by the degraded model.

On the other hand, it is also inappropriate to provide the user's local data directly to the model provider for updating the user model, as this may violate privacy or security requirements. Furthermore, the user's local data may be massive and redundant, which brings a significant burden of data transmission.

Accordingly, the disclosure provides improved systems, devices, and methods for updating a user model. One or more embodiments of the disclosure enable targeted updates to the user model using user local data, while maintaining user privacy and security. In addition, one or more embodiments of the disclosure are capable of addressing one or more other issues.

### 1. Exemplary System Architecture

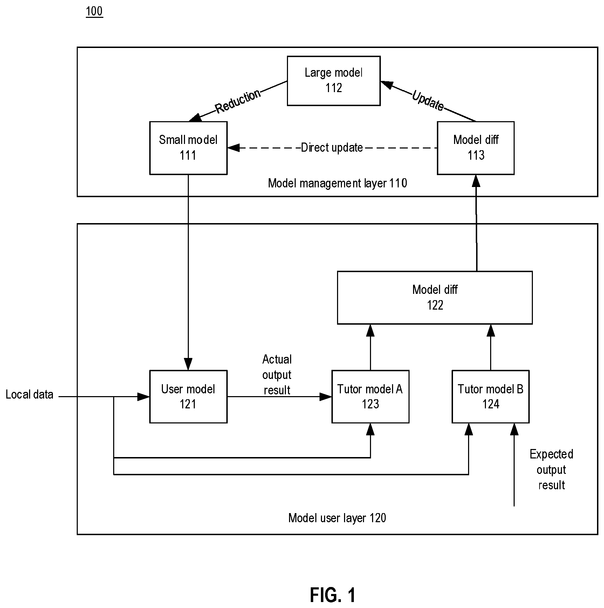

FIG. 1 illustrates a schematic diagram of an architecture 100 according to an embodiment of the disclosure. As shown, the architecture 100 may include a model management layer 110 and a model user layer 120.

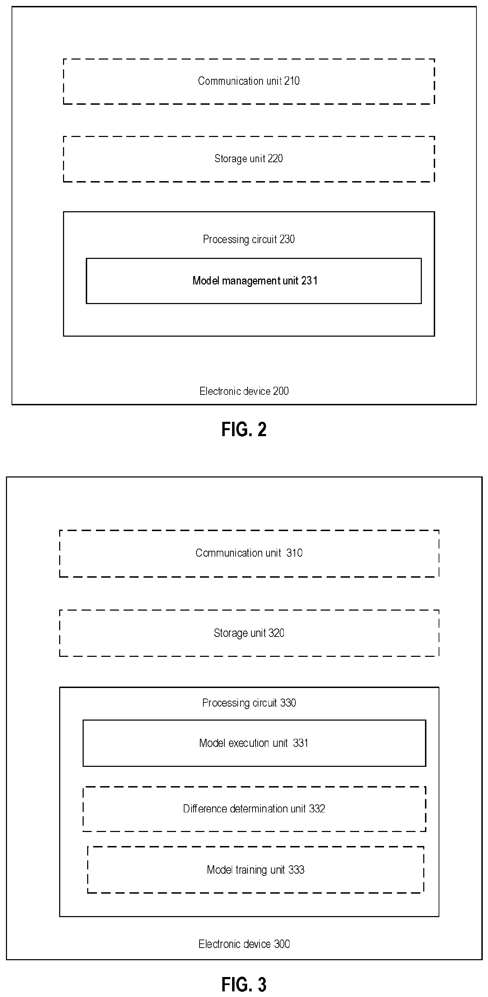

The model management layer 110 may be associated with a provider of an artificial intelligence model. In some embodiments, the model management layer 110 may be implemented as one or more model management servers. A model management server may be a physical server, or a server hosted in the cloud. The model management server may be implemented, for example, with an electronic device described in FIG. 2.

According to some embodiments of the disclosure, the model management layer 110 may be configured to maintain one or more artificial intelligence models. Maintenance may include generating, storing, and/or updating the one or more artificial intelligence models. In some examples, the model management layer 110 may initially train the one or more artificial intelligence models based on a training dataset it has collected. The trained artificial intelligence models may be provided by the model management layer 110 to the model user layer 120 for deployment in the model user layer 120. In addition, the model management layer 110 may update the one or more artificial intelligence models based on feedback (e.g., a model difference 113) from the model user layer 120. The model management layer 110 may provide an updated version of the artificial intelligence models to the model user layer 120.

In the embodiment shown in FIG. 1, the model management layer 110 may be configured to maintain a large model 112. The large model 112 may be an artificial intelligence model that has a complexity exceeding a certain threshold. Such a large model 112 may not be suitable for running on a client device with limited processing capability. Therefore, the model management layer 110 may further be configured to reduce the large model 112 to generate a small model 111. The reduction may be performed by any suitable means such as knowledge distillation, model pruning, etc. The small model 111 may be provided to the model user layer 120 to be deployed and used as a user model 121.

According to an embodiment of the disclosure, the model management layer 110 may update the small model 111 based on feedback (e.g., the model difference 113) obtained from the model user layer 120. In an embodiment where the model management layer 110 maintains the large model 112, the model management layer 110 may be configured to update the small model 111 in a suitable manner. In some examples, the model management layer 110 may first update the large model 112 and then generate an updated version of the small model 111 based on a reduction of the updated large model 112. In other examples, instead of first updating the large model 112, the model management layer 110 may directly update the small model 111.

In an alternative embodiment (not shown), instead of maintaining the large model 112, the model management layer 110 maintains one or more small models 111. A respective small models 111 of these small models 111 may be provided to the model user layer 120 for deployment in a respective application scenario. In this case, the model management layer 110 may directly update the respective small model 111 based on model difference 113 that is obtained under the respective application scenario.

The model user layer 120 may be associated with a user of the artificial intelligence models. The model user layer 120 may be referred to as a user system. In some embodiments, the model user layer 120 may include one or more client devices. A client device may include, for example, a UE, an in-vehicle device, a media device, and the like. The client device in the model user layer 120 may be implemented, for example, with an electronic device described in FIG. 3. In some embodiments, the model user layer 120 may optionally include an intermediate device (e.g., a base station device) between the client device and the model management server.

The model user layer 120 may be configured to execute one or more trained user models 121 provided by the model management layer 110. The model user layer 120 may be configured to provide local data as input data to the user model 121. The local data may include actual data associated with the client device in the model user layer 120 (which is also referred to herein as user data). The local data may include, but is not limited to, environmental data, operational data, measurement data, multimedia data, etc., associated with the client device. The user model 121 is a trained artificial intelligence model that may generate one or more output results based on the input local data. The output result may include various types of outputs, such as a classification of the input data or a prediction generated based on the input data. The client device in the model user layer 120 may further use the output result of the user model 121 to perform one or more actions, such as controlling an operation of the client device.

According to some embodiments of the disclosure, the model user layer 120 may further be configured to determine a model difference 122 associated with the user model 121. The model difference 122 may be used to characterize a difference between actual performance and expected performance of the user model 121 in the deployed environment. In some embodiments, the model user layer 120 may include two tutor models, for example, tutor model A 123 and tutor model B 124. Each of tutor model A 123 and tutor model B 124 may be an artificial intelligence model that is different from the user model 121. Tutor model A 123 may be configured to resemble the actual performance of the deployed user model 121. Tutor model B 124 may be configured to resemble the expected performance of the user model 121. The expected performance may refer to optimal performance of the user model 121 in the current environment. The difference between tutor model A 123 and tutor model B 124 may be used to characterize the model difference 122.

In some embodiments, the model user layer 120 may be configured to train one or more initial tutor models to obtain tutor model A 123 and tutor model B 124. For example, the model user layer 120 may be configured to perform model training, using local data along with an actual output result that is generated by the user model 121 based on that local data, thereby obtaining tutor model A 123. The model user layer 120 may further be configured to perform model training, using local data and an expected output result of the user model 121 with respect to that local data, thereby obtaining tutor model B 124. The model user layer 120 may determine the model difference 122 based on the obtained tutor model A 123 and tutor model B 124. The model difference 122 may represent the difference between the actual performance and the expected performance of the user model 121. The model difference 122 may be characterized using any suitable manner. For example, the model difference 122 may be represented as a difference between any of model parameters, performance metrics, or output results of tutor model A 123 and tutor model B 124.

The model user layer 120 may further be configured to provide the determined model difference 122 to the model management layer 110 for updating the user model, as described previously. In some embodiments, the model management layer 110 may aggregate a plurality of model differences 122 from the model user layer 120 to update the user model.

It should be understood that the architecture 100 of FIG. 1 is merely exemplary. Various modifications may be made to the architecture 100 without departing from the scope of the disclosure. For example, although the architecture 100 is shown as including only one small model 111 and one corresponding user model 121, the architecture 100 in other embodiments may include any number of small models 111 and any number of user models 121 for deployment to a plurality of client devices. In some embodiments, a respective pair of tutor models 123 and 124 may be trained for each of the plurality of client devices. In other embodiments, a respective pair of tutor models 123 and 124 may be trained for each subset of client devices among the plurality of client devices. In this case, the pair of tutor models 123 and 124 may be trained based on the actual output result and the expected output result of the user models from all client devices in that subset. Other modifications are possible without departing from the scope of the disclosure.

### 2. Exemplary Devices

FIG. 2 illustrates an exemplary block diagram of an electronic device 200 according to some embodiments of the disclosure. The electronic device 200 may be implemented at the model management layer 110 of the architecture 100 as described in FIG. 1. In some embodiments, the electronic device 200 may be implemented as a model management server. The electronic device 200 may be used to perform one or more operations described herein related to the model management layer 110 or the model management server. Specifically, the electronic device 200 may be implemented as the model management server itself, as part of the model management server, or as a control device for controlling the model management server. For example, the electronic device 200 may be implemented as a chip for controlling the model management server. In some embodiments herein, the electronic device 200 is implemented as the model management server itself, which is merely for convenience of description and is not intended to constitute a limitation.

According to some embodiments of the disclosure, the electronic device 200 may include a communication unit 210, a storage unit 220, and a processing circuit 230.

The communication unit 210 of the electronic device 200 may be used to receive or send a wired transmission or a radio transmission. In some embodiments of the disclosure, the communication unit 210 may perform functions such as up-conversion, digital-to-analog conversion on a signal to be sent, and/or perform functions such as down-conversion, analog-to-digital conversion on a received signal. The communication unit 210 may be implemented using various technologies. For example, the communication unit 210 may be implemented as a communication interface component, such as an antenna device, a radio frequency circuit, and a part of a baseband processing circuit. In FIG. 2, the communication unit 210 is drawn with dashed lines, as the communication unit 210 may be alternatively located within the processing circuit 230 or external to the electronic device 200.

The storage unit 220 of the electronic device 200 may store information generated by the processing circuit 230, information received from or to be sent to other devices through the communication unit 210, computer programs, machine code, and data used for operations of the electronic device 200, and the like. According to some embodiments of the disclosure, the storage unit 220 may store one or more artificial intelligence models, model differences, updates to the artificial intelligence models, update logs or records, and/or other associated data. The storage unit 220 may be a volatile memory and/or a non-volatile memory. For example, the storage unit 220 may include, but is not limited to, a random access memory (RAM), a dynamic random access memory (DRAM), a static random access memory (SRAM), a read-only memory (ROM), and a flash memory. The storage unit 220 is drawn with dashed lines, as it may be alternatively located within the processing circuit 230 or external to the electronic device 200.

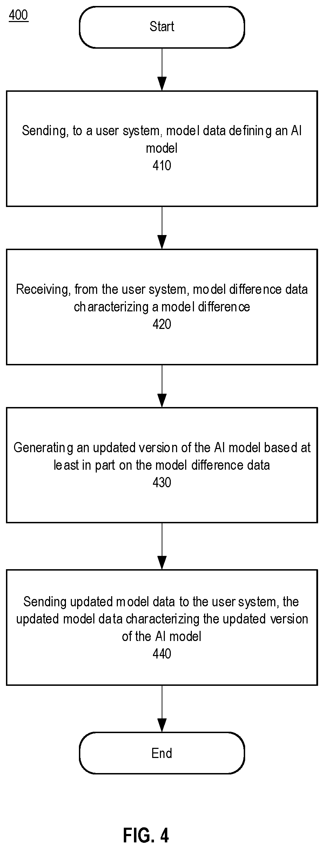

The processing circuit 230 of the electronic device 200 may be configured to perform one or more operations, thereby providing various functions of the electronic device 200. For example, the processing circuit 230 may be configured to perform steps of the method described with respect to FIG. 4. The processing circuit 230 may perform corresponding operations by executing one or more executable instructions stored in the storage unit 220. The processing circuit 230 may be used to implement one or more steps performed by the model management server in various methods according to some embodiments of the disclosure.

According to some embodiments of the disclosure, the processing circuit 230 may be configured to perform the method described herein for updating a user model. For example, the processing circuit 230 may include a model management unit 231. Specifically, the model management unit 231 may be configured to send model data defining an artificial intelligence model to a user system. The user system is, for example, the model user layer 120 as described in FIG. 1. The model management unit 231 may further be configured to receive model difference data characterizing a model difference from the user system. Then, the model management unit 231 may further be configured to generate an updated version of the artificial intelligence model based at least in part on the model difference data. The model management unit 231 may further be configured to send updated model data to the user system, the updated model data characterizing the updated version of the artificial intelligence model.

It should be understood that the processing circuit 230 in FIG. 2 is merely exemplary. The processing circuit 230 may include one or more additional units for performing the technology of the disclosure and/or one or more additional steps for performing the technology of the disclosure.

FIG. 3 illustrates an exemplary block diagram of an electronic device 300 according to some embodiments of the disclosure. The electronic device 300 may be implemented at the model user layer 120 of the architecture 100 as described in FIG. 1. In some embodiments, the electronic device 300 may be implemented as a client device. The electronic device 300 may be used to perform one or more operations described herein related to the model user layer 120 or the client device. Specifically, the electronic device 300 may be implemented as the client device itself, as part of the client device, or as a control device for controlling the client device. For example, the electronic device 300 may be implemented as a chip for controlling the client device. In some embodiments herein, the electronic device 300 is implemented as the client device itself, which is merely for the convenience of description and is not intended to constitute a limitation.

According to some embodiments of the disclosure, the electronic device 300 may include a communication unit 310, a storage unit 320, and a processing circuit 330.

The communication unit 310 of the electronic device 300 may be used to receive or send a wired transmissions or a radio transmissions. In some embodiments of the disclosure, the communication unit 310 may perform functions such as up-conversion and digital-to-analog conversion on a signal to be sent and/or functions such as down-conversion and analog-to-digital conversion on a received signal. The communication unit 310 may be implemented using various technologies. For example, the communication unit 310 may be implemented as a communication interface component, such as an antenna device, a radio frequency circuit, and a part of a baseband processing circuit. In FIG. 3, the communication unit 310 is drawn with dashed lines, as the communication unit 310 may be alternatively located within the processing circuit 330 or external to the electronic device 300.

The storage unit 320 of the electronic device 300 may store information generated by the processing circuit 330, information received from or to be sent to other devices through the communication unit 310, computer programs, machine code, and data used for operations of the electronic device 300, and the like. According to some embodiments of the disclosure, the storage unit 320 may store a user model and local data, an actual output result, and an expected output result for the user models. According to some embodiments of the disclosure, the storage unit 320 may further store one or more tutor models and model differences. The storage unit 320 may be a volatile memory and/or a non-volatile memory. For example, the storage unit 320 may include, but is not limited to, a random access memory (RAM), a dynamic random access memory (DRAM), a static random access memory (SRAM), a read-only memory (ROM), and a flash memory. The storage unit 320 is drawn with dashed lines, as it may be alternatively located within the processing circuit 330 or external to the electronic device 300.

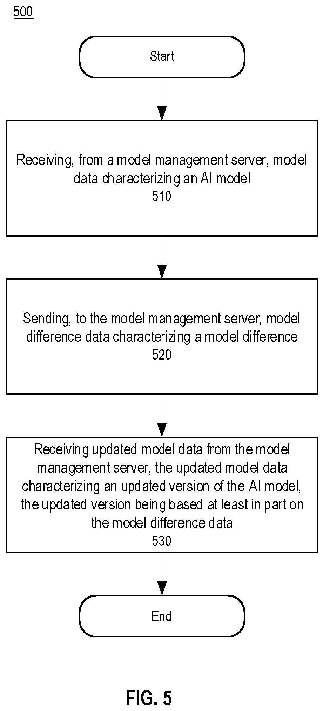

The processing circuit 330 of the electronic device 300 may be configured to perform one or more operations, thereby providing various functions of the electronic device 300. For example, the processing circuit 330 may be configured to perform steps of the method described with respect to FIG. 5. The processing circuit 330 may perform corresponding operations by executing one or more executable instructions stored in the storage unit 320. The processing circuit 330 may be used to implement one or more steps performed by the model user layer in various methods according to some embodiments of the disclosure.

According to some embodiments of the disclosure, the processing circuit 330 may be configured to perform the method described herein for updating a user model. For example, the processing circuit 330 may be configured to receive model data characterizing an artificial intelligence model from a model management server. The processing circuit 330 may further be configured to send model difference data characterizing a model difference to the model management server. The processing circuit 330 may further be configured to receive updated model data from the model management server, the updated model data characterizing an updated version of the artificial intelligence model, the updated version being based at least in part on the model difference data.

According to some embodiments of the disclosure, the processing circuit 330 may include a model execution unit 331 for executing or using a received artificial intelligence model. The model execution unit 331 may be configured to provide input data that is local to a user to an artificial intelligence model, thereby obtaining one or more output results from the artificial intelligence model. The obtained output results are an actual output result of the artificial intelligence model. The actual output result may be provided to the electronic device 300 for performing one or more actions. Optionally, as described below, the actual output result may also be used to train one or more tutor models. The model execution unit 331 may further be configured to monitor the performance of the deployed artificial intelligence model. In response to the performance of the deployed artificial intelligence model falling below a certain criterion, the model execution unit 331 may send a message to trigger an update of the artificial intelligence model.

According to some embodiments of the disclosure, the processing circuit 330 may further include a difference determination unit 332 for determining the model difference data. According to some embodiments of the disclosure, the model difference data represents a difference between the actual performance and the expected performance of the deployed artificial intelligence model. In some embodiments, the difference may be represented by a difference between two tutor models (e.g., a first tutor model and a second tutor model), where the first tutor model resembles the actual performance of the artificial intelligence model, while the second tutor model resembles the expected performance of the artificial intelligence model. According to some embodiments of the disclosure, the processing circuit 330 may further include a model training unit 333 for training the first tutor model and the second tutor model. The model training unit 333 may be configured to train the first tutor model based at least in part on the input data along with the actual output result of the artificial intelligence model. The model training unit 333 may further be configured to train the second tutor model based at least in part on the input data along with the expected output result of the artificial intelligence model. The difference determination unit 332 and the model training unit 333 are drawn with dashed lines, as they may be alternatively located outside the processing circuit 330 or external to the electronic device 300.

It should be understood that the processing circuit 330 in FIG. 3 is merely exemplary. The processing circuit 330 may include one or more additional units for performing the technology of the disclosure and/or one or more additional steps for performing the technology of the disclosure.

### 3. Exemplary Methods

FIG. 4 illustrates a flowchart of a method 400 for updating a user model according to some embodiments of the disclosure. The method 400 may be performed at the model management layer. For example, method 400 may be executed by a model management server. The model management server may be implemented with the electronic device 200 mentioned above. Accordingly, the method 400 may be executed by the processing circuit 230 of the electronic device 200. Specifically, the processing circuit 230 of the electronic device 200 may execute the method 400 by executing a computer program.

The method 400 may begin with step 410. In step 410, the model management server may be configured to send model data characterizing an artificial intelligence model to a user system. The artificial intelligence model sent to the user may be referred to as a user model.

According to an embodiment of the disclosure, the sent user model may be generated by the model management server. In some embodiments, the user model may be a small model that is generated by reducing a large model. The large model may be an artificial intelligence model that has a complexity exceeding a certain threshold. Complexity of a model may be characterized, for example, by complexity of the topology, a number of model parameters, or any suitable metric, including but not limited to a number of layers, a number of nodes of the model, etc. For example, a large model of the model management server may have several millions or more model parameters. Such a large model may not be suitable for running on a client device with limited processing capability. The model management server may be configured to reduce the large model or a portion thereof by any suitable means such as knowledge distillation, model pruning, etc., thereby generating a small model. The small model may have a complexity significantly lower than the large model. For example, the small model may have a simpler model topology and/or fewer model parameters. The model management server may generate different small models for different application scenarios. The small model may be application-specific, for example, generated by reducing a large model specifically for a particular application scenario. Therefore, the model management server may generate a plurality of small models for different application scenarios based on a same large model. As an example, and not a limitation, a large model may be a multimodal model capable of handling various media types (images, audio, text, video, etc.), while the plurality of small models may include a picture classification model, a face recognition models, a language translation model, a music recognition model, and so on. Other types or sizes of large models and small models are possible.

It should be understood that the technology disclosed herein may be applied to various types of artificial intelligence models, including models that have already been developed and models that might be developed in the future. Exemplary artificial intelligence models include, but are not limited to, models trained by convolutional neural networks (CNNs), deep neural networks (DNNs), recurrent neural networks (RNNs), long short-term memory (LSTMs), generative models, random forests, or their variations and enhancement algorithms.

According to an embodiment of the disclosure, model data sent by a model management server and defining an artificial intelligence model may have various suitable forms. The model data enables the client device to deploy and use the artificial intelligence model based on this data. In some embodiments, the model data may include a set of model parameters for the artificial intelligence model. Each artificial intelligence model may be represented by a set of model parameters characterizing that model. For example, for a CNN model, the set of model parameters characterizing the model may include, but is not limited to, one or more parameters describing a number of layers in the neural network, a number of neurons in each layer and their distribution, connections between the neurons, weight of each of neuron connections, etc. For other types of models, a set of other types of model parameters may be used for characterization. In some embodiments, the model data may include an identifier for the artificial intelligence model that uniquely identifies the model to be deployed. The user system receiving the model data may use the identifier to retrieve a corresponding model from a model repository. Other forms of model data are also possible.

In some embodiments, the model management server may further send instruction information to the user system. This instruction information may notify the user system that the model sent in step 410 is an initial trained model. In addition, this instruction information may also notify the user system that the model service management server is able to correct the model based on feedback from the user system.

The method 400 may then proceed to step 420. In this step, the model management server may be configured to receive model difference data characterizing the model difference from the user system.

According to some embodiments of the disclosure, the model difference data may represent the difference between the actual performance of the artificial intelligence model deployed on a user system and the expected performance of that artificial intelligence model. In some embodiments, this difference may be represented as a difference between a first tutor model and a second tutor model, wherein the first tutor model resembles the actual performance of the user model deployed on the user system, and the second tutor model resembles the expected performance of the user model deployed on the user system. Details regarding the model difference data will be further described later.

The method 400 may then proceed to step 430. In this step, the model management server may be configured to generate an updated version of the artificial intelligence model based at least in part on the model difference data.

According to some embodiments of the disclosure, the model management server maintains a larger scale model, while the user model is a reduced smaller scale model. In this case, the model management server may update the larger scale model based at least in part on model difference data and generate the smaller scale model (as an updated version of the artificial intelligence model) based on a reduction of the updated larger scale model. Alternatively, the model management server may directly update the smaller scale model (as an updated version of the artificial intelligence model) based at least in part on the model difference data. The update may include various adjustments to the artificial intelligence model, such as adjusting parameters (including topology and/or weights).

The method 400 may then proceed to step 440. In this step, the model management server may be configured to send updated model data to the user system, the updated model data characterizing the updated version of the artificial intelligence model. The updated version of the artificial intelligence model may be deployed to the client device to replace the previous version of the user model.

It should be understood that the above description is merely an exemplary embodiment of the method 400. The method 400 may include one or more additional steps performed by the model management server. Details of various embodiments of the method 400, as well as additional or optional embodiments, will be further described below.

FIG. 5 illustrates a flowchart of a method 500 for updating a user model according to some embodiments of the disclosure. The method 500 may be performed at the model user layer. For example, method 500 may be executed by a client device. The client device may be implemented by the electronic device 300 mentioned above. Accordingly, the method 500 may be executed by the processing circuit 330 of the electronic device 300. Specifically, the processing circuit 330 of the electronic device 300 may execute the method 500 by executing a computer program.

The method 500 may begin with step 510. In step 510, a client device may be configured to receive model data characterizing an artificial intelligence model from a model management server.

As mentioned above, model data characterizing an artificial intelligence model may include model parameters of the artificial intelligence model or an identifier of the artificial intelligence model. A client device may deploy the corresponding artificial intelligence model (i.e., user model) locally based on the model data. The client device may use local data as input data to execute the user model and obtain a respective output result.

The method 500 may then proceed to step 520. In this step, the client device may be configured to send model difference data characterizing a model difference to the model management server.

In the disclosure, the model difference data may be used to characterize the difference between actual performance of the deployed user model and the expected performance of the user model in the deployment environment. The actual performance of the user model is associated with the actual output result that is provided by the user model based on the local data. The expected performance of the user model is associated with the expected output result (e.g., correct output results) that the user model should provide based on that local data. As mentioned above, because the training dataset used by the model provider (e.g., the model management layer) to train the user model may not optimally match with the actual environment in which the user is using that user model, the user may not obtain the optimal performance from the user model in the actual environment. In other words, because the performance of the user model is not perfect, the actual output result of the user model may be inconsistent with the user's expected output result. Such inconsistency is specific to the actual environment of the user, which reflects a defect of the deployed user model in that actual environment. The performance of the user model in that actual environment may be improved by uncovering such inconsistency and providing it to the model management layer to update the user model.

According to an embodiment of the disclosure, to characterize the above inconsistency from a model perspective, two tutor models may be introduced, that is, a first tutor model and a second tutor model. The first tutor model may be configured to resemble the actual performance of the user model. Given the same input data, the first tutor model is expected to produce an output result that is the same as or similar to the actual output result of the user model. The second tutor model may be configured to resemble the expected performance of the user model. Given the same input data, the second tutor model is expected to produce an output result that is the same as or similar to the expected output result of the user model. The model difference data provided in step 520 may be characterized as a model difference between the first tutor model and the second tutor model. Providing model difference data instead of user data to the model management layer may protect user privacy and security, because the model difference data does not contain data that is directly related to the user's actual environment.

According to some embodiments of the disclosure, the model difference data may be obtained based on one or more aspects of the first tutor model and the second tutor model. In some examples, the model difference data may represent a difference between one or more model parameters of the first tutor model and the second tutor model. In other examples, the model difference data may represent a difference between one or more performance metrics of the first tutor model and the second tutor model. In still other examples, the model difference data may represent a difference between one or more output results of the first tutor model and the second tutor model. In other examples, the model difference data may include a combination of the various forms described above. Other forms of the model difference data are also possible.

According to some embodiments of the disclosure, various metrics may be used to characterize the model difference. Exemplary metrics may include one or more of gradient, weight, divergence, distance, eigenvalues, etc. In some embodiments, values of various metrics characterizing the model difference may be a difference between values of two corresponding parameters in the first and second tutor models. For example, in the case where the respective parameter is the gradient of model weights, the value characterizing the model difference between the two models may include a difference in the gradients associated with the two models. In some embodiments, values of various metrics may be a distance metric or a similarity metric (such as Euclidean distance, KL divergence, normalized value, etc.) between the two parameters. In some embodiments, eigenvalues of the model difference may be used to represent the model difference to further reduce amount of data. Eigenvalues of the model difference may be represented by compression or enhancement of the model difference, including but not limited to distribution, eigenvalues, pruning of the model difference, top-k weights of the model difference, weights of the model difference above a certain threshold, certain layers of the model difference, etc.

According to some embodiments of the disclosure, the first tutor model and the second tutor model that satisfy the foregoing requirements may be obtained in various ways. Preferably, the first tutor model and the second tutor model may be obtained through model training. For example, a first training dataset may be constructed using input data of the deployed user model together with the actual output result of the user model. In the first training dataset, the actual output result of the user model may be labeled as facts of "ground true". In addition, a second training dataset may be constructed using the input data of the deployed user model together with the expected output result of the user model. In the second training dataset, the expected output result of the user model may be labeled as facts of "ground true". The first training dataset may be used to perform model training to obtain the first tutor model. The second training dataset may be used to perform model training to obtain the second tutor model.

For purpose of explanation, and as an example rather than a limitation, the input data could be a picture of a dog, and the actual output result of the user model classifies the picture as "cat", while the expected output result is "dog". Accordingly, in the first training dataset, this picture is labeled as "cat" (i.e., the actual output result of the user model), because it is desired that an output result of the first tutor model for this kind of picture is the same as the actual output result of the user model (even if the output result is incorrect). In the second training dataset, this picture is labeled as "dog", because it is desired that an output result of the second tutor model for this kind of picture is the same as the expected output result of the user model. The first and second tutor models are iteratively trained respectively using the constructed first and second training datasets, which may allow the two models to resemble the actual performance and expected performance of the user model respectively.

According to an embodiment of the disclosure, the data used to construct the first training dataset or the second training dataset may come from one or more clients where the user model is deployed. For example, in some embodiments, the input data and/or the output result (e.g., the actual output result and the expected output result of the user model) may come from a single client (e.g., a single UE or in-vehicle device) where the user model is deployed. In some other embodiments, the input data and/or the output results from a plurality of clients where the user model is deployed may be aggregated to construct the first training dataset for training the first tutor model and to construct the second training dataset for training the second tutor model. For example, the plurality of clients may include all clients where the user model is deployed. Alternatively, the plurality of clients may include a specific subset of all clients where the user model is deployed, such as some of the clients sharing a same actual environment. In some examples, the specific subset may be identified based on locations (e.g., cellular cells, driving areas, etc.) of the individual clients. In some embodiments, the output results used to construct the training datasets (e.g., the actual and expected output results of the user model) may come from a specific client, while the input data used to construct the training datasets may come from one or more other clients within the subset to which that specific client belongs.

According to some embodiments of the disclosure, the first tutor model and the second tutor model may be based on a same initial tutor model. In other words, the two tutor models are obtained by training the same initial tutor model using different first training dataset and second training dataset, respectively. In some embodiments, the model management layer may provide the initial tutor model to the model user layer. As described above, providing the initial tutor model may include providing model parameters or an identifier for the model. The initial tutor model may have a same type as the user model.

In some embodiments, training of the first and second tutor models is initiated in response to the actual performance of the user model failing to meet a specific criterion. For example, the client device may monitor the performance of the deployed user model. When the performance of the deployed user model fails to meet the specific criterion, the client device may send a message to the model management layer to, for example, request an update to the deployed user model. In response to this message, the model management layer may trigger the training of the tutor model. For example, the model management layer may provide the initial tutor model to the model user layer. In addition, the model management layer may send a training data configuration to the model user layer, which may specify composition and format of the first and second training datasets. Based on the training data configuration, the model user layer may accordingly collect and save the actual output results, expected output results, and input data of the user model, for constructing the first and second training datasets.

According to some embodiments of the disclosure, the first and second tutor models may have a complexity different from that of the deployed user model. In some examples, the complexity of the first and second tutor models may be lower than that of the user model, which may save on the overhead of model training. In some examples, the complexity of the first and second tutor models may be the same as that of the user model. For example, the initial tutor model may be the same as an initial model on which the user model is based. In some examples, the first and second tutor models may have a complexity higher than that of the deployed user model. For example, in the case of using a CNN model, the initial tutor model used to train the first and second tutor models may have more layers and/or more neurons per layer in the neural network than the deployed user model. Increased complexity allows for characterizing the model difference with a higher resolution.

The method 500 may then proceed to step 530. In this step, the client device may be configured to receive updated model data from the model management server. The updated model data characterizes an updated version of the user model, which is based at least in part on the model difference data in step 520.

According to some embodiments of the disclosure, the user model deployed at the client is a smaller scale model that is generated from a reduction of a larger scale model. In this case, the model management server may update the larger scale model based at least in part on model difference data and generate the smaller scale model, as the updated version of the user model, based on a reduction of the updated larger scale model. Alternatively, the model management server may directly update the smaller scale model, as the updated version of the user model, based at least in part on the model difference data.

According to some embodiments of the disclosure, the client device may be configured to deploy the updated version of the user model using the updated model data. The client device may allow the updated version. If the performance of the updated version of the user model still does not meet the specific criterion, the client device may send a message to the model management layer to request further updates to the user model. Further updates to the user model may include repeating some or all of the foregoing steps, which will not be repeated here. The model management server may be configured to record each update of the model.

It should be understood that the above description is merely an exemplary embodiment of the method 500. The method 500 may include one or more additional steps performed by the model user layer. Details of various embodiments of the method 500, as well as additional or optional embodiments, will be further described below.

The functionality of elements disclosed herein may be implemented using circuit or processing circuit, which includes general-purpose processors, application-specific processors, integrated circuits, ASICs ("Application-Specific Integrated Circuits"), conventional circuit, and/or combinations thereof, configured or programmed to perform the disclosed functions. Processors are considered as processing circuit or circuit because they include transistors and other circuit therein. In the disclosure, a circuit, unit, or apparatus is hardware that performs or is programmed to perform the described functions. The hardware may be any hardware disclosed herein or otherwise known, programmed or configured to perform the described functions. When the hardware is a processor that may be considered as a type of circuit, the circuit, apparatus, or unit is a combination of the hardware and software, the software being used to configure the hardware and/or the processor.

### 4. Exemplary Scenarios

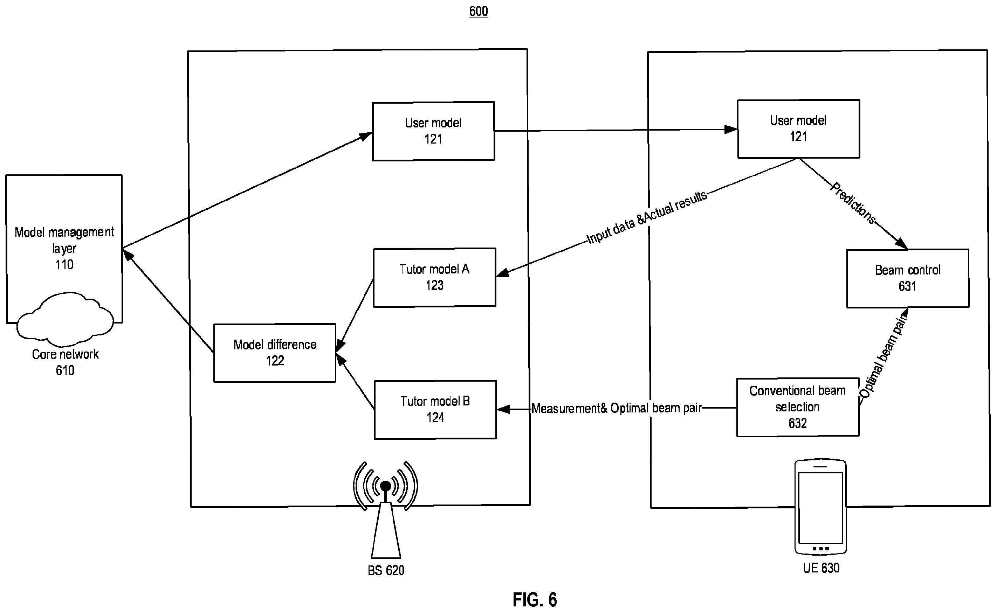

Applications of technology disclosed herein in several exemplary scenarios is described below in conjunction with FIG. 6 to FIG. 10. It should be understood that these exemplary scenarios are illustrative and not intended to constitute a limitation.

FIG. 6 illustrates an application of the technology according to some embodiments of the disclosure in a cellular network 600. The application scenario shown is associated with beam control. It is merely illustrative and not intended to constitute a limitation.

Cellular network 600 may include a core network 610, a base station 620 (e.g., gNB), and a UE 630. The model management layer 110 may be deployed at the core network 610. For example, the core network 610 may include 5G core network (5GC). The model management layer 110 may be deployed in a cloud at 5GC. In some embodiments, the model management layer 110 may be deployed at Network Data Analytics Function (NWDAF).

The base station 620 may receive a user model 121 from the model management layer 110. An initial user model 121 may be trained by the model management layer 110 using training data. The base station 620 may further forward the user model 121 to the UE 630, for deployment at the UE 630. For example, the base station 620 may receive model data characterizing the user model 121 from the model management layer 110 and forward the model data to the UE 630.

The UE 630 may deploy the user model 121 based on the received model data. The UE 630 may use data that is specific to the UE 630 as input to run the deployed user model 121. Data that is specific to the UE 630 data may be referred to as local data of the UE 630, which includes, but is not limited to, environmental data, operational data, measurement data, multimedia data, etc. Different UEs may have different local data.

An actual output result of the user model 121 deployed at the UE 630 may be used for one or more operations of the UE 630. In the example shown in FIG. 6, the one or more operations include beam control. In a cellular network, the base station 620 may have a plurality of candidate beams, and the UE 630 may also have a plurality of candidate beams. These beams form a plurality of candidate beam pairs. The beam control is used to use an optimal beam pair from the plurality of candidate beam pairs for communication between the base station 620 and the UE 630.

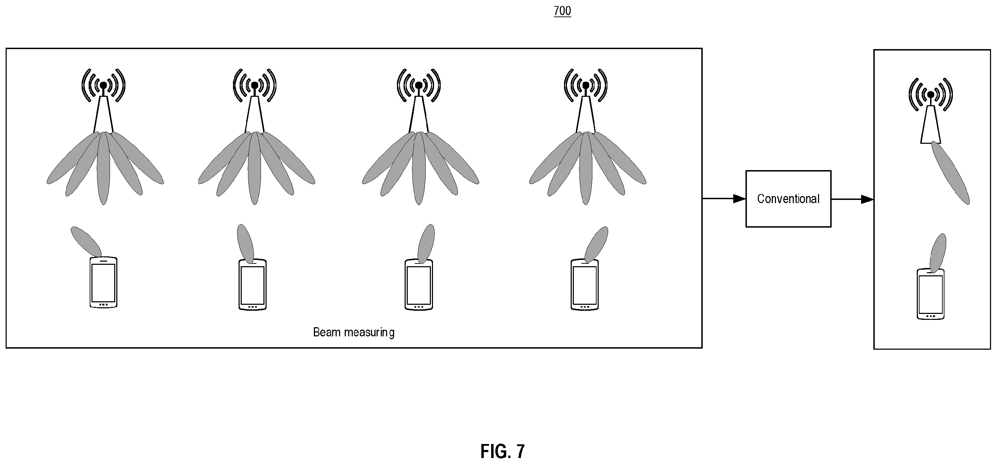

Traditionally, the optimal beam pair is selected through a beam selection process. FIG. 7 illustrates a conventional beam selection process. The UE 630 may include a conventional beam selection module 632 for performing the conventional beam selection process. In this example, the base station has 5 candidate beams, each beam pointing in a different direction. Additionally, the UE has 4 candidate beams, each beam pointing in a different direction. Therefore, there are 20 candidate beam pairs between the base station and the UE. The number of candidate beams is exemplary and not limiting. During the beam selection process, the base station and the UE need to perform measurements for each of these candidate beam pairs. For example, Reference Signal Received Power (RSRP) at the UE or any other suitable parameter may be measured. Specifically, for each of the 4 candidate beams of the UE, the base station transmits 5 candidate beams sequentially. The conventional beam selection module 632 may perform 20 measurements to obtain a measurement result (e.g., RSRP) associated with each candidate beam pair. A beam pair with the optimal measurement result (e.g., the beam with the highest RSRP) may be considered as the optimal beam pair. The conventional beam selection module 632 may provide the optimal beam pair to the beam control module 631. The beam control module 631 may control the UE 630 to use the optimal beam pair to communicate with the base station 620.

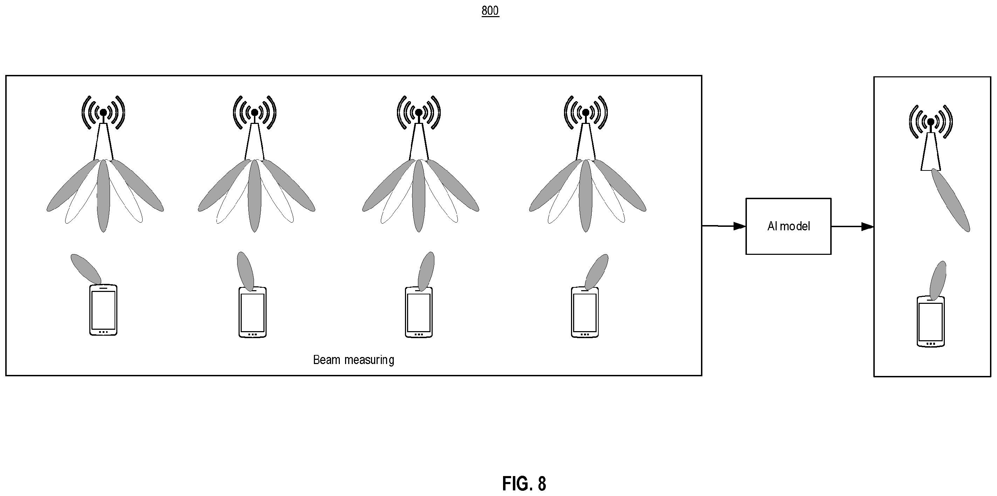

Artificial intelligence models (e.g., the user model 121) may be used to improve the selection process of the optimal beam pair. FIG. 8 illustrates an example 800 of using the user model 121 to predict an optimal beam pair according to some embodiments of the disclosure. In this example, the user model 121 is trained to predict the optimal beam pair based on a small number of beam measurements. In this example, the number of beam measurements may be reduced. For example, the base station may not transmit one or more candidate beams that are shown as blank, but only transmit candidate beams in a few predetermined specific directions. The results of the small number of beam measurements performed may be provided as input data to the user model 121. The user model 121 may infer the optimal beam pair based on this input data. This may reduce overhead for beam measurements.

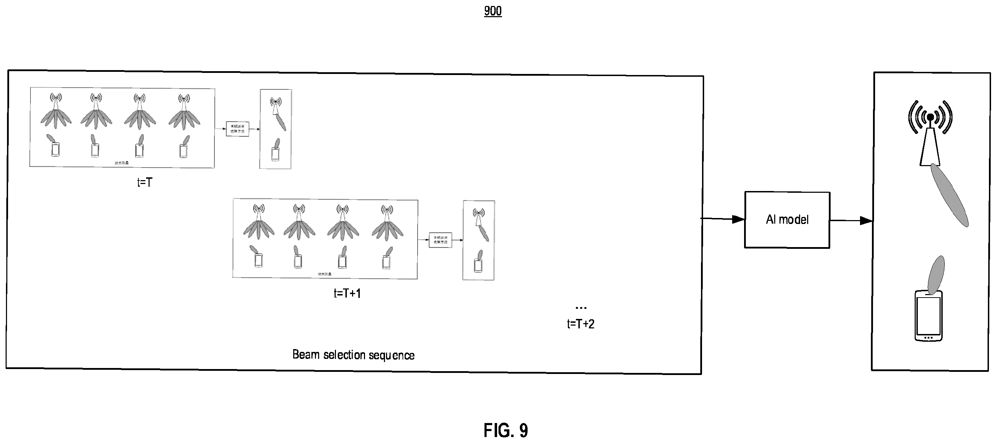

FIG. 9 illustrates another example 900 of using the user model 121 to predict an optimal beam pair according to some embodiments of the disclosure. In this example, the user model 121 is trained to predict a future optimal beam pair based on a previous beam selection sequence. This model is, for example, an LSTM model. The previous beam selection sequence may include results of beam measurements and determined optimal beam pairs at one or more previous time points (e.g., T, T+1, ... ,). In this example, the previous beam selection sequence may be provided as input data to the user model 121. The user model 121 may predict, based on this input data, the optimal beam pair at the current time or at a future time.

In the examples of FIGS. 8-9, the prediction result (i.e., the predicted beam pair) of the user model 121 may be provided to the beam control module 631 of the UE 630. The beam control module 631 may control the UE 630 to use the predicted beam pair to communicate with the base station 620. It should be understood that the examples of FIGS. 8-9 are merely illustrative and not intended to constitute a limitation. In other examples, the user model 121 may predict the optimal beam pair based on other types of input data.

Although using the user model 121 to predict the optimal beam pair may have some advantages compared to the conventional process, the predicted optimal beam pair is affected by the actual environment (e.g., a specific cell environment) in which the UE is located. The user model 121, which was trained and provided by the model management layer, may not perfectly match with this actual environment. Therefore, the user model may be updated using the technology disclosed herein. For example, an update of the user model may be triggered when the performance of the user model 121 is detected to be below a certain criterion. As an example, when the RSRP of the optimal beam pair predicted by the user model 121 is below a first predetermined threshold, or when the communication quality using the predicted optimal beam pair is below a second predetermined threshold, the UE 630 (or the base station 620) may send a message or request, to the model management layer 110, for triggering an update. Other specific criteria are also possible.

In response to triggering the update of the user model, the model management layer 110 may provide an initial tutor model to the model user layer for training a first tutor model (e.g., tutor model A) and a second tutor model (e.g., tutor model B). The tutor models may be trained at the UE 630 or at the base station 620. In the example of FIG. 6, tutor model A 123 and tutor model B are trained at the base station 620 because the base station 620 has more processing capability than the UE 630. In this case, the UE 630 may construct the input data and the actual results of user model 121 as a first training dataset for training tutor model A. As described above, this input data may be beam measurement results (e.g., may come from the beam measurement performed by the conventional beam selection module 632), or a previous beam selection sequence (may come from stored data), or other local data (e.g., measurement data associated with the channel environment) that is input into the user model 121 to predict the optimal beam pair. The actual result may be a predicted beam pair that is generated by the user model 121 based on the respective input data. Additionally, the UE 630 may further construct the input data and the expected result of the user model 121 as a second training dataset for training tutor model B. For example, the expected result could be an optimal beam pair that has an optimal beam measurement result. This optimal beam measurement result could be, for example, the highest RSRP determined by measuring all candidate beam pairs. The optimal beam pair with the optimal beam measurement result may be provided from the conventional beam selection module 632.

In some embodiments, the UE 630 may receive training data configuration from the base station 620, which may specify how the UE constructs the first training dataset and the second training dataset. Specifically, the training data configuration may specify input data, the actual output result, and /or the expected output result of the user model for transmission from the UE 630 to the base station 620. The training data configuration may be carried in one or more signaling from the base station to the UE, such as RRC, MAC CE, or DCI. For example, in the conventional beam selection process, the UE 630 may only feed back a limited number of beam measurement results to the base station 620 (e.g., 4 beam pairs with the highest RSRP). To use the technology of the disclosure, the base station 620 may instruct the UE 630 to feed back more beam measurement results (e.g., all measurement results that will be used as input data to the user model 121). This may be instructed via the training data configuration sent to the UE 630.

The base station 620 may train tutor model A and tutor model B respectively based on the received first training dataset and second training dataset. If there are a plurality of UEs 630 that are deployed with the same user model 121 in the cell served by the base station 620, the base station 620 may optionally aggregate the input data and output results from the user models of the plurality of UEs 630 as training data to train the tutor models. Various appropriate technologies may be used to train the respective tutor models, including training technologies that have been developed and those that may be developed in the future. Training may be an iterative process that terminates when a termination condition (e.g., convergence) is met.

Since tutor model A is trained based on the input data and the actual output result of the user model 121, tutor model A is able to resemble the actual performance of the user model 121. Tutor model A may have the same or similar model parameters or topology as the user model 121. Since tutor model B is trained based on the input data and the expected output result of the user model 121, tutor model B is able to resemble the expected performance of the user model 121. Tutor model B may have the same or similar model parameters or topology as an desired version of the user model 121 in the current environment. In an actual applications, based on security and confidentiality requirements, the user model 121 may be opaque to the UE 630, therefore the UE 630 has no access to or knowledge of internal structure of the user model 121. However, by training tutor model A and tutor model B, the UE 630 may resemble the actual and desired versions of the user model 121 without modifying the user model 121 itself. The difference between the resembled actual and desired versions of the user model 121 may reflect, to some extent, a defect of the user model 121 in the current environment. This defect is environment-specific, therefore, it may be used to update the user model, so that the updated user model is better matched to the current environment.

The model difference 122 may be determined based on the trained tutor model A and tutor model B. In some embodiments, the model difference 122 may be represented as a difference between one or more model parameters of tutor model A and tutor model B. In some embodiments, the model difference 122 may be represented as the difference between one or more output results of tutor model A and tutor model B. For example, when the same input data is provided, the difference between a first optimal beam pair predicted by tutor model A and a second optimal beam pair predicted by tutor model B may constitute a part of the model difference 122. In some embodiments, the model difference 122 may be represented as the difference between one or more performance metrics of tutor model A and tutor model B. For example, the difference between the RSRPs of the first optimal beam pair and the second optimal beam pair may constitute a part of the model difference 122. The model difference data may include a combination of the various forms described above. Other forms of model difference data are also possible.

The base station 620 may send the determined model differences 122 to the model management layer 110 for updating the user model 121. As described above, the update of the user model 121 by the model management layer 110 may be direct or indirect (e.g., updating a larger scale model first). When the model management layer 110 connects to a plurality of base stations 620, it may perform the update based on a plurality of model differences 122 from the plurality of base stations 620. For example, these model differences 122 may be combined. In some examples, the model management layer 110 may perform the update by adopting federated learning. The resulting updated version of the user model 121 may be deployed to the UE 620 via the base station 620 to replace the previously deployed user model. The updated version of the user model 121 may be sent at an appropriately chosen time. For example, the updated version of the user model 121 may be sent at the time when the UE 630 is not currently using the user model 121, so as to complete replacement of the user model 121.

It should be understood that the embodiments shown in FIGS. 6-9 are merely illustrative and not intended to constitute a limitation. In other embodiments, the artificial intelligence model may be used for aspects other than beam control. For example, in some embodiments, the artificial intelligence model may be used to select a target cell. In some embodiments, the artificial intelligence model may be used to schedule a transmission resource. In some embodiments, the artificial intelligence model may be used to predict network congestion. In some embodiments, the artificial intelligence model may be used for power adjustment. The technologies disclosed herein are not limited to a type or a function of the used artificial intelligence model. Each type of artificial intelligence model may have respective input data and respective actual output results. Furthermore, the expected output result of the artificial intelligence model may be obtained through various suitable means. For example, as described above for beam control, the UE or the base station may have or perform conventional methods, the results provided by which may be considered as the expected output result of the artificial intelligence model. In some examples, the expected output result of the artificial intelligence model may be provided by a person or other device who knows the expected output result. For example, in an example where the artificial intelligence model is used to predict network rate, a ground true network rate may be measured and provided as the expected output result of the artificial intelligence model.

Furthermore, it should be understood that the distribution of the various components or elements shown in FIG. 6 is merely illustrative and not intended to constitute a limitation. In other embodiments, the distribution of components or elements associated with the technology of the disclosure may be different. In some examples, one or both of the two tutor models may alternatively be located at the UE. In some other examples, one or both of the two tutor models may alternatively be located at other devices (e.g., other network functions) other than the base station and the UE in the cellular network 600.

It should be understood that the cellular network 600 shown in FIGS. 6-9 may include cellular communication technologies, such as 2G, 3G, 4G, 5G, 6G, etc., currently developed, under development, or to be developed in the further. Similar technologies may further be implemented in other types of wireless networks, such as Wi-Fi networks.

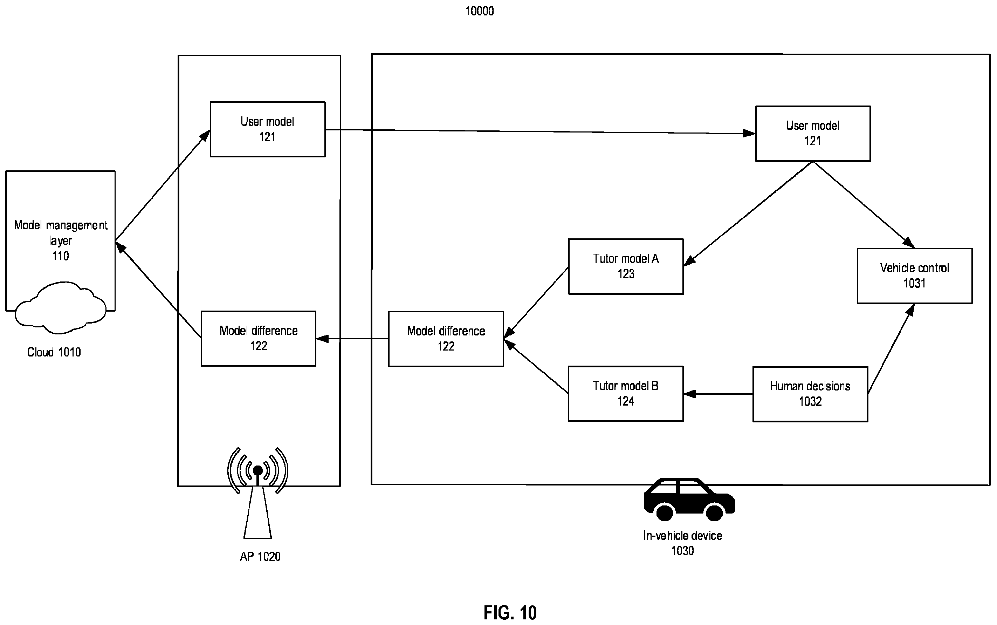

FIG. 10 illustrates an application of the technology according to some embodiments of the disclosure in Internet of Vehicles 1000. The application scenario shown is associated with vehicle control. It is merely illustrative and not intended to constitute a limitation.

The Internet of Vehicles 1000 may include a cloud 1010, an access point (AP) 1020, and an in-vehicle device 1030. The model management layer 110 may be deployed at the cloud 1010.

The AP 1020 may be a Wi-Fi access point, a cellular base station, or any other suitable network access point. The AP 1020 may receive the user model 121 from the model management layer 110. The AP 1020 may also forward the user model 121 to the in-vehicle device 1030, for deployment at the in-vehicle device 1030. For example, the AP 1020 may receive model data characterizing the user model 121 from the model management layer 110 and forward the model data to the in-vehicle device 1030.

The in-vehicle device 1030 may deploy the user model 121 based on the received model data. The in-vehicle device 1030 may use data that is specific to the in-vehicle device 1030 as input to run the deployed user model 121. This data that is specific to the in-vehicle device 1030 may be referred to as local data of the in-vehicle device 1030, which includes, but is not limited to, environmental data, operational data, measurement data, multimedia data, etc. Different in-vehicle devices 1030 may have different local data.

The actual output result of the user model 121 deployed at the in-vehicle device 1030 may be used for one or more operations of the in-vehicle device 1030. In the example shown in FIG. 10, the one or more operations include vehicle control. The vehicle control may include, but is not limited to, various vehicle actions such as starting, accelerating, decelerating, braking, lane changing, and steering. As an example and not a limitation, the user model 121 may be configured to control lane changes based on measurement results from sensors mounted on the vehicle. In other embodiments, the actual output result of the user model 121 may be used for other aspects of the in-vehicle device 1030 without limitation.

The actual output result of the user model 121 may be provided to the vehicle control module 1031. The vehicle control module 1031 may control the vehicle based on the result. Simultaneously, the vehicle control module 1031 may also receive control commands from other sources, such as driving decisions from a driver of the vehicle or other control devices on the vehicle. If the actual output result of the user model 121 does not meet a certain criterion (e.g., a degree or a frequency of driver intervention exceeds a threshold), the performance of the user model 121 may not reach an expected level. Accordingly, the in-vehicle device 1030 may initiate an update to the user model 121.

In the example shown in FIG. 10, tutor model A 123 and tutor model B 124 may be trained at the in-vehicle device 1030. The in-vehicle device 1030 may be configured to construct different training datasets to train tutor model A 123 and tutor model B 124 respectively. For example, the in-vehicle device 1030 may use input data from the user model 121 deployed at the in-vehicle device 1030 and the corresponding actual output results to train tutor model A 123. In the example of vehicle control, the input data may be sensor data associated with the vehicle, such as captured environmental images, a current location, a current speed, etc. The actual output result may include automatic driving decisions given by the user model 121, such as lane change instructions, which may include, for example, lane change direction, lane change speed, turn signal light action, etc. In some embodiments, the in-vehicle device 1030 may use a human driving decision as the expected output result to train tutor model B 124. The human decision module 1032 of the in-vehicle device 1030 may collect human driving decisions. In the example of vehicle control, the human driving decisions may be decisions that are actually made by the driver of the vehicle. For example, the human driving decisions may include whether the driver allows the vehicle to operate based on the automatic driving decision given by the user model 121, or whether the driver has done a driving action different from that automatic driving decision. The in-vehicle device 1030 may further be configured to determine a model difference 122 based on the trained tutor model A 123 and tutor model B 124, and send the determined model difference 122 to the model management layer 110 via AP 1020 for updating the user model 121. The updated version of the user model 121 may further be forwarded to the in-vehicle device 1030 via the AP 1020 for deployment.

It should be understood that the embodiments shown in FIG. 10 are merely illustrative and not intended to constitute a limitation. In other embodiments, the artificial intelligence model may be used in other aspects of vehicle control. For example, in some embodiments, the artificial intelligence model may be used for air conditioning control. In some embodiments, the artificial intelligence model may be used for gasoline or battery control. Other functions of the artificial intelligence model are also possible. Furthermore, the distribution of the various components or elements shown in FIG. 10 is merely illustrative and not intended to constitute a limitation. In other embodiments, the distribution of components or elements associated with the technology of the disclosure may be different.

In further other examples, the technology according to some embodiments of the disclosure may be used in media devices. For example, an artificial intelligence model may be deployed in a media device and configured to classify media data. For instance, the media device may be a camera with an artificial intelligence model that may classify captured images. Accordingly, input data to the artificial intelligence model may include media data, and the actual output result of the artificial intelligence model includes a predicted classification that is generated based on the media data. The expected data results of the artificial intelligence model include the ground true classification of the media data, which may be obtained in various ways. For example, the ground true classification may be obtained through user feedback.

It should be understood that the exemplary scenarios described above are illustrative and not intended to constitute a limitation. The technology disclosed herein may also be used in other suitable scenarios.

### 5. Application Product Examples

The technology of the disclosure can be applied to various products.

For example, the control device/base station mentioned in the disclosure may be implemented as any type of base station, for example eNB, such as macro eNB and small eNB. A small eNB may be an eNB that covers a cell smaller than a macro cell, such as a pico eNB, a micro eNB, and a home (femto) eNB. For another example, it may be implemented as a gNB, such as a macro gNB and a small gNB. A small gNB may be a gNB covering a cell smaller than a macro cell, such as a pico gNB, a micro gNB, and a home (femto) gNB. Alternatively, the base station may be implemented as any other type of base station, such as NodeB and Base Transceiver Station (BTS). The base station may include: a main body (also referred to as a base station device) configured to control radio communication; and one or more Remote Radio Heads (RRHs) disposed at a different location from the main body. In addition, various types of terminals to be described below may each operate as a base station by performing base station functions temporarily or semi-persistently. For example, the terminal devices mentioned in the disclosure may be implemented as mobile terminals (such as smart phones, tablet personal computers (PCs), notebook PCs, portable game terminals, portable/dongle-type mobile routers and digital cameras) or vehicle-mounted terminals (such as vehicle navigation devices) in some embodiments. The terminal device may also be implemented as a terminal performing machine-to-machine (M2M) communication (also referred to as a machine type communication (MTC) terminal). In addition, the terminal device may be a radio communication module (such as an integrated circuit module including a single wafer) mounted on each of the above terminals.

Application examples according to the disclosure will be described below with reference to the drawings.

### [Examples of Base Stations]

It should be understood that the term base station in the disclosure has the full breadth of its ordinary meaning, and includes at least a radio communication station used as portion of a wireless communication system or radio system to facilitate communication. Examples of the base station may be, for example but not limited to, the following: the base station may be either or both of a base transceiver station (BTS) and a base station controller (BSC) in the GSM system, and may be either or both of a radio network controller (RNC) or Node B in the WCDMA system, may be eNB in the LTE and LTE-Advanced system, or may be corresponding network nodes in future communication systems (e.g., the gNB that may appear in the 5G communication systems, eLTE eNB, etc.). Some of the functions in the base station of the disclosure may also be implemented as an entity having a control function for communication in the scenario of a D2D, M2M, V2V and V2X communication, or as an entity that plays a spectrum coordination role in the scenario of a cognitive radio communication.

### First Example

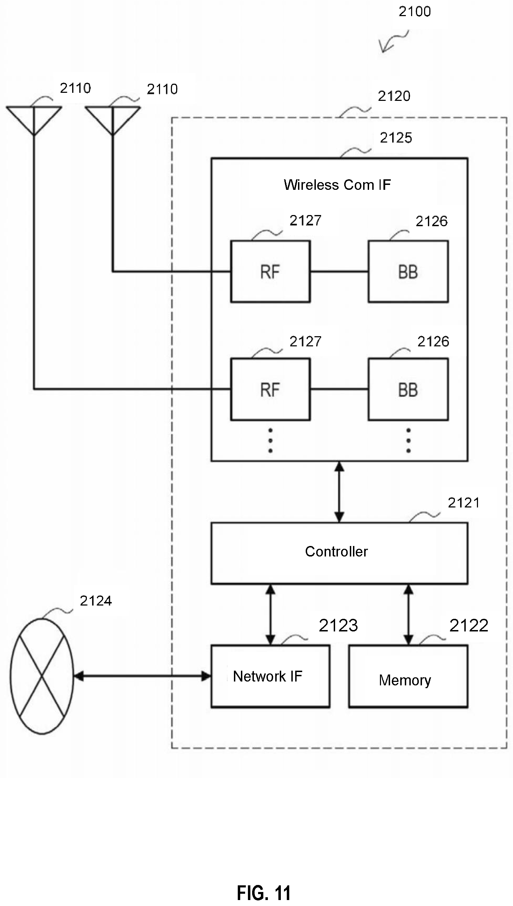

FIG. 11 is a block diagram showing a first example of an exemplary configuration of a gNB to which the technology of the disclosure may be applied. The gNB 2100 includes multiple antennas 2110 and a base station device 2120. The base station device 2120 and each antenna 2110 may be connected to each other via an RF cable. In one implementation, the gNB 2100 (or the base station device 2120) here may correspond to the above electronic device on the control side.

Each of the antennas 2110 includes a single or multiple antenna elements (such as multiple antenna elements included in a Multiple Input Multiple Output (MIMO) antenna), and is used for the base station device 2120 to send and receive wireless signals. As shown in FIG. 11, gNB 2100 may include multiple antennas 2110. For example, multiple antennas 2110 may be compatible with multiple frequency bands used by gNB 2100.

The base station device 2120 includes a controller 2121, a memory 2122, a network interface 2123 and a wireless communication interface 2125.

The controller 2121 may be, for example, a CPU or a DSP, and operates various functions of a higher layers of the base station device 2120. For example, the controller 2121 determines location information of a target terminal device in the at least one terminal devices according to the positioning information of at least one terminal device on the terminal side in the wireless communication system and a specific location configuration information of the at least one terminal device acquired by the wireless communication interface 2125. The controller 2121 may have a logical function to perform control such as radio resource control, radio bearer control, mobility management, access control and scheduling. This control may be performed in conjunction with nearby gNBs or core network nodes. The memory 2122 includes RAM and ROM, and stores programs executed by the controller 2121 and various types of control data (such as a terminal list, transmission power data, and scheduling data).

The network interface 2123 is a communication interface for connecting the base station device 2120 to the core network 2124. The controller 2121 may communicate with the core network node or another gNB via the network interface 2123. In this case, the gNB 2100 and the core network node or other gNB may be connected to each other through logical interfaces such as S1 interface and X2 interface. The network interface 2123 may also be a wired communication interface or a wireless communication interface for wireless backhaul. If the network interface 2123 is a wireless communication interface, the network interface 2123 may use a higher frequency band for wireless communication than the frequency band used by the wireless communication interface 2125.

The wireless communication interface 2125 supports any cellular communication scheme such as Long Term Evolution (LTE) and LTE-Advanced, and provides a wireless connection to terminals located in a cell of the gNB 2100 via the antenna 2110. The wireless communication interface 2125 may generally include, for example, a baseband (BB) processor 2126 and an RF circuit 2127. The BB processor 2126 may perform, for example, encoding/decoding, modulation/demodulation, and multiplexing/demultiplexing, and perform various types of signal processing for layers (such as L1, Medium Access Control (MAC), Radio Link Control (RLC), and Packet Data Convergence Protocol (PDCP)). Instead of the controller 2121, the BB processor 2126 may have a part or all of the logic functions described above. The BB processor 2126 may be a memory storing a communication control program, or a module including a processor configured to execute a program and related circuits. The update program may cause the function of the BB processor 2126 to change. The module may be a card or a blade inserted into a slot of the base station device 2120. Alternatively, the module may also be a chip mounted on a card or blade. Meanwhile, the RF circuit 2127 may include, for example, a mixer, a filter, and an amplifier, and transmit and receive wireless signals via the antenna 2110. Although FIG. 11 illustrates an example in which one RF circuit 2127 is connected to one antenna 2110, the disclosure is not limited to this illustration, instead one RF circuit 2127 may be connected to multiple antennas 2110 at the same time.

As shown in FIG. 11, the wireless communication interface 2125 may include multiple BB processors 2126. For example, multiple BB processors 2126 may be compatible with multiple frequency bands used by gNB 2100. As shown in FIG. 11, the wireless communication interface 2125 may include multiple RF circuits 2127. For example, the multiple RF circuits 2127 may be compatible with multiple antenna elements. Although FIG. 11 illustrates an example in which the wireless communication interface 2125 includes multiple BB processors 2126 and multiple RF circuits 2127, the wireless communication interface 2125 may also include a single BB processor 2126 or a single RF circuit 2127.

### Second example

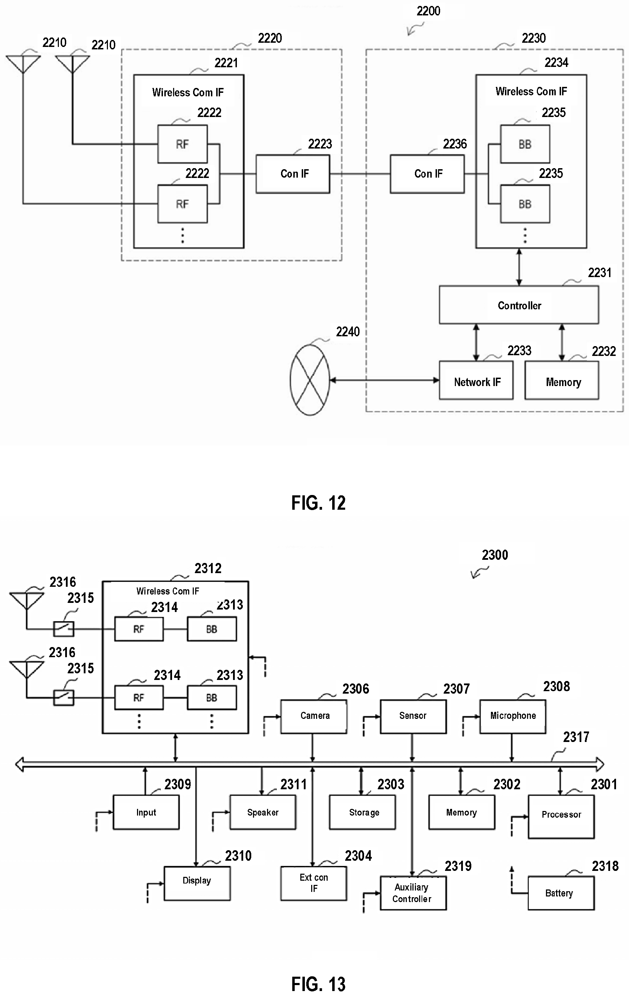

FIG. 12 is a block diagram showing a second example of an exemplary configuration of a gNB to which the technology of the disclosure may be applied. The gNB 2200 includes multiple antennas 2210, RRH 2220 and base station device 2230. The RRH 2220 and each antenna 2210 may be connected to each other via an RF cable. The base station device 2230 and the RRH 2220 may be connected to each other via a high-speed line such as an optical fiber cable. In one implementation, the gNB 2200 (or the base station device 2230) here may correspond to the above electronic device on the control side.

Each of the antennas 2210 includes a single or multiple antenna elements (such as multiple antenna elements included in a MIMO antenna), and is used for the RRH 2220 to send and receive wireless signals. As shown in FIG. 12, the gNB 2200 may include multiple antennas 2210. For example, the multiple antennas 2210 may be compatible with multiple frequency bands used by the gNB 2200.

The base station device 2230 includes a controller 2231, a memory 2232, a network interface 2233, a wireless communication interface 2234 and a connection interface 2236. The controller 2231, the memory 2232, and the network interface 2233 are the same as the controller 2121, the memory 2122, and the network interface 2123 described with reference to FIG. 11.

The wireless communication interface 2234 supports any cellular communication scheme (such as LTE and LTE-Advanced), and provides wireless communication to terminals located in a sector corresponding to the RRH 2220 via the RRH 2220 and the antenna 2210. The wireless communication interface 2234 may generally include, for example, a BB processor 2235. The BB processor 2235 is the same as the BB processor 2126 described with reference to FIG. 11 except that the BB processor 2235 is connected to the RF circuit 2222 of the RRH 2220 via the connection interface 2236. As shown in FIG. 12, the wireless communication interface 2234 may include multiple BB processors 2235. For example, the multiple BB processors 2235 may be compatible with multiple frequency bands used by the gNB 2200. Although FIG. 12 illustrates an example in which the wireless communication interface 2234 includes multiple BB processors 2235, the wireless communication interface 2234 may also include a single BB processor 2235.

The connection interface 2236 is an interface for connecting the base station device 2230 (wireless communication interface 2234) to the RRH 2220. The connection interface 2236 may also be a communication module for communication in the above high-speed line connecting the base station device 2230 (wireless communication interface 2234) to the RRH 2220.

The RRH 2220 includes a connection interface 2223 and a wireless communication interface 2221.

The connection interface 2223 is an interface for connecting the RRH 2220 (wireless communication interface 2221) to the base station device 2230. The connection interface 2223 may also be a communication module used for communication in the above high-speed line.

The wireless communication interface 2221 transmits and receives wireless signals via the antenna 2210. Wireless communication interface 2221 may generally include RF circuitry 2222, for example. The RF circuit 2222 may include, for example, a mixer, a filter, and an amplifier, and transmits and receives wireless signals via the antenna 2210. Although FIG. 12 shows an example in which one RF circuit 2222 is connected to one antenna 2210, the disclosure is not limited to this illustration, instead one RF circuit 2222 may be connected to multiple antennas 2210 at the same time.

As shown in FIG. 12, the wireless communication interface 2221 may include multiple RF circuits 2222. For example, the multiple RF circuits 2222 may support multiple antenna elements. Although FIG. 12 illustrates an example in which the wireless communication interface 2221 includes multiple RF circuits 2222, the wireless communication interface 2221 may also include a single RF circuit 2222.

### [Examples of User Devices/Terminal Devices]

### First Example

FIG. 13 is a block diagram showing an example of an exemplary configuration of a communication device 2300 (e.g., a smart phone, a communicator, etc.) to which the techniques of the disclosure may be applied. The communication device 2300 includes a processor 2301, a memory 2302, a storage apparatus 2303, an external connection interface 2304, a camera apparatus 2306, a sensor 2307, a microphone 2308, an input apparatus 2309, a display apparatus 2310, a speaker 2311, a wireless communication interface 2312, one or more antenna switches 2315, one or more antennas 2316, a bus 2317, a battery 2318, and an auxiliary controller 2319. In one implementation, the communication device 2300 (or the processor 2301) here may correspond to the above transmitting device or electronic device on the terminal side.

The processor 2301 may be, for example, a CPU or a system on chip (SoC), and controls functions of an application layer and other layers of the communication device 2300. The memory 2302 includes RAM and ROM, and stores data and programs executed by the processor 2301. The storage apparatus 2303 may include a storage medium such as a semiconductor memory and a hard disk. The external connection interface 2304 is an interface for connecting an external apparatus (such as a memory card and a universal serial bus (USB) apparatus) to the communication device 2300.

The camera apparatus 2306 includes an image sensor (such as a charge coupled device (CCD) and a complementary metal oxide semiconductor (CMOS)), and generates a captured image. Sensors 2307 may include a set of sensors such as measurement sensors, gyro sensors, geomagnetic sensors, and acceleration sensors. The microphone 2308 converts sound input to the communication device 2300 into an audio signal. The input apparatus 2309 includes, for example, a touch sensor configured to detect a touch on the screen of the display apparatus 2310, a keypad, a keyboard, buttons, or switches, and receives operations or information input from a user. The display apparatus 2310 includes a screen (such as a Liquid Crystal Display (LCD) and an Organic Light Emitting Diode (OLED) display), and displays an image output by the communication device 2300. The speaker 2311 converts an audio signal output from the communication device 2300 into sound.

The wireless communication interface 2312 supports any cellular communication scheme (such as LTE and LTE-Advanced), and performs wireless communication. The wireless communication interface 2312 may generally include, for example, a BB processor 2313 and an RF circuit 2314. The BB processor 2313 may perform, for example, encoding/decoding, modulation/demodulation, and multiplexing/demultiplexing, and perform various types of signal processing for wireless communication. Meanwhile, the RF circuit 2314 may include, for example, a mixer, a filter, and an amplifier, and transmit and receive wireless signals via the antenna 2316. The wireless communication interface 2312 may be a chip module on which a BB processor 2313 and an RF circuit 2314 are integrated. As shown in FIG. 13, the wireless communication interface 2312 may include multiple BB processors 2313 and multiple RF circuits 2314. Although FIG. 13 shows an example in which the wireless communication interface 2312 includes multiple BB processors 2313 and multiple RF circuits 2314, the wireless communication interface 2312 may also include a single BB processor 2313 or a single RF circuit 2314.

In addition, the wireless communication interface 2312 may support another type of wireless communication scheme, such as a short-range wireless communication scheme, a near field communication scheme, and a wireless local area network (LAN) scheme, in addition to the cellular communication scheme. In this case, the wireless communication interface 2312 may include a BB processor 2313 and an RF circuit 2314 for each wireless communication scheme.

Each of the antenna switches 2315 switches the connection destination of the antenna 2316 among multiple circuits included in the wireless communication interface 2312 (e.g., circuits for different wireless communication schemes).

Each of the antennas 2316 includes a single or multiple antenna elements (such as multiple antenna elements included in a MIMO antenna), and is used for the wireless communication interface 2312 to transmit and receive wireless signals. As shown in FIG. 13, the communication device 2300 may include multiple antennas 2316. Although FIG. 13 illustrates an example in which the communication device 2300 includes multiple antennas 2316, the communication device 2300 may also include a single antenna 2316.

In addition, the communication device 2300 may include an antenna 2316 for each wireless communication scheme. In this case, the antenna switch 2315 may be omitted from the configuration of the communication device 2300.

The bus 2317 connects the processor 2301, memory 2302, storage apparatus 2303, external connection interface 2304, camera apparatus 2306, sensor 2307, microphone 2308, input apparatus 2309, display apparatus 2310, speaker 2311, wireless communication interface 2312, and auxiliary controller 2319 to each other. The battery 2318 provides power to the various blocks of the communication device 2300 shown in FIG. 13 via feed lines, which are partially shown as dashed lines in the figure. The auxiliary controller 2319 operates the minimum necessary functions of the communication device 2300 in sleep mode, for example.

### Second example

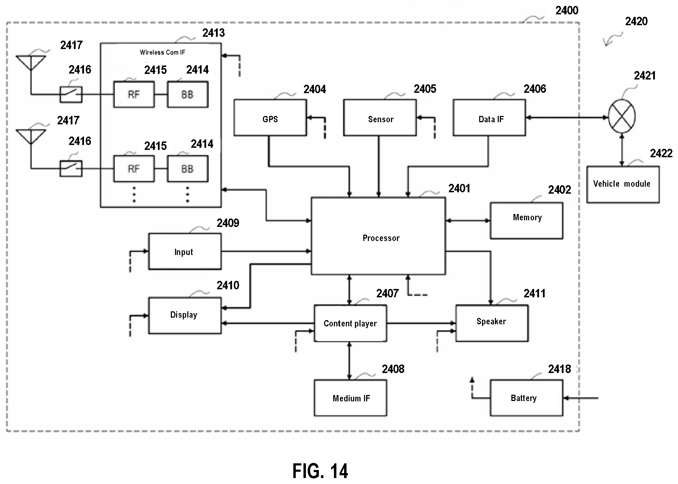

FIG. 14 is a block diagram showing an example of an exemplary configuration of a vehicle navigation device 2400 to which the technology of the disclosure may be applied. The vehicle navigation device 2400 includes a processor 2401, a memory 2402, a global positioning system (GPS) module 2404, a sensor 2405, a data interface 2406, a content player 2407, a storage medium interface 2408, an input apparatus 2409, a display apparatus 2510, a speaker 2411, a wireless communication interface 2413, one or more antenna switches 2416, one or more antennas 2417, and a battery 2418. In one implementation, the vehicle navigation device 2400 (or the processor 2401) here may correspond to a transmitting device or a terminal-side electronic device.

The processor 2401 may be, for example, a CPU or a SoC, and controls the navigation function and other functions of the vehicle navigation device 2400. The memory 2402 includes RAM and ROM, and stores data and programs executed by the processor 2401.

The GPS module 2404 measures the location (such as latitude, longitude, and altitude) of the vehicle navigation device 2400 using GPS signals received from GPS satellites. The sensors 2405 may include a set of sensors such as gyroscopic sensors, geomagnetic sensors, and air pressure sensors. The data interface 2406 is connected to, for example, the in-vehicle network 2421 via a terminal not shown, and acquires data generated by the vehicle (such as vehicle speed data).

The content player 2407 reproduces content stored in a storage medium (such as CD and DVD), which is inserted into the storage medium interface 2408. The input apparatus 2409 includes, for example, a touch sensor configured to detect a touch on the screen of the display apparatus 2510, a button, or a switch, and receives an operation or information input from a user. The display apparatus 2510 includes a screen such as an LCD or OLED display, and displays an image of a navigation function or reproduced content. The speaker 2411 outputs sound of a navigation function or reproduced content.

The wireless communication interface 2413 supports any cellular communication scheme such as LTE and LTE-Advanced, and performs wireless communication. The wireless communication interface 2413 may generally include, for example, a BB processor 2414 and an RF circuit 2415. The BB processor 2414 may perform, for example, encoding/decoding, modulation/demodulation, and multiplexing/demultiplexing, and perform various types of signal processing for wireless communication. Meanwhile, the RF circuit 2415 may include, for example, a mixer, a filter, and an amplifier, and transmit and receive wireless signals via the antenna 2417. The wireless communication interface 2413 may also be a chip module on which the BB processor 2414 and the RF circuit 2415 are integrated. As shown in FIG. 14, the wireless communication interface 2413 may include multiple BB processors 2414 and multiple RF circuits 2415. Although FIG. 14 illustrates an example in which the wireless communication interface 2413 includes multiple BB processors 2414 and multiple RF circuits 2415, the wireless communication interface 2413 may also include a single BB processor 2414 or a single RF circuit 2415.

In addition, the wireless communication interface 2413 may support another type of wireless communication scheme, such as a short-distance wireless communication scheme, a near field communication scheme, and a wireless LAN scheme, in addition to the cellular communication scheme. In this case, the wireless communication interface 2413 may include a BB processor 2414 and an RF circuit 2415 for each wireless communication scheme.

Each of the antenna switches 2416 switches the connection destination of the antenna 2417 among multiple circuits included in the wireless communication interface 2413 (such as circuits for different wireless communication schemes).

Each of the antennas 2417 includes a single or multiple antenna elements (such as multiple antenna elements included in a MIMO antenna), and is used for the wireless communication interface 2413 to transmit and receive wireless signals. As shown in FIG. 14, the vehicle navigation device 2400 may include multiple antennas 2417. Although FIG. 14 illustrates an example in which the vehicle navigation device 2400 includes multiple antennas 2417, the vehicle navigation device 2400 may also include a single antenna 2417.

In addition, the vehicle navigation device 2400 may include an antenna 2417 for each wireless communication scheme. In this case, the antenna switch 2416 may be omitted from the configuration of the vehicle navigation device 2400.

The battery 2418 provides power to various blocks of the vehicle navigation device 2400 shown in FIG. 14 via feeder lines, which are partially shown as dotted lines in the figure. The battery 2418 accumulates electric power supplied from the vehicle.

The technology of the disclosure may also be implemented as an in-vehicle system (or vehicle) 2420 including one or more blocks in a vehicle navigation device 2400, an in-vehicle network 2421, and a vehicle module 2422. The vehicle module 2422 generates vehicle data (such as vehicle speed, engine speed, and breakdown information), and outputs the generated data to the in-vehicle network 2421.

The exemplary embodiments of the disclosure are described above with reference to the accompanying drawings, but the disclosure is of course not limited to the above examples. A person skilled in the art may find various alterations and modifications within the scope of the appended claims, and it should be understood that they will naturally come under the technical scope of the disclosure.

It should be understood that the machine-readable storage medium or the machine-executable instructions in the program product according to the embodiments of the disclosure may be configured to perform operations corresponding to the above device and method embodiments. When referring to the above device and method embodiments, the embodiments of the machine-readable storage medium or the program product will be obvious to those skilled in the art, so the description will not be repeated. Machine-readable storage media and program products for carrying or including the above machine-executable instructions also fall within the scope of the disclosure. Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of implemented by software and/or firmware, respective programs constituting the respective software are stored in the storage medium of the related device, and various functions may be performed when the programs are executed.

For example, multiple functions included in one unit in the above embodiments may be implemented by separate apparatus. Alternatively, multiple functions implemented by multiple units in the above embodiments may be respectively implemented by separate apparatus. In addition, one of the above functions may be realized by multiple units. Needless to say, such a configuration is included in the technical scope of the disclosure.

In this specification, the steps described in the flowcharts include not only processing performed in time series in the stated order but also processing performed in parallel or individually and not necessarily in time series. Furthermore, even in the steps processed in time series, needless to say, the order may be appropriately changed.

### 6. Exemplary Embodiments

1. An electronic system, comprising: at least one processing unit; and at least one storage unit, the at least one storage unit including computer program code, wherein the at least one storage unit and the computer program code are configured to, via the at least one processing unit, cause the electronic system to perform operations of: receiving, from a model management server, model data characterizing an artificial intelligence model; sending, to the model management server, model difference data characterizing a model difference; and receiving updated model data from the model management server, the updated model data characterizing an updated version of the artificial intelligence model, the updated version being based at least in part on the model difference data.
2. The electronic system of embodiment 1, wherein the model difference data represents a difference between actual performance of the artificial intelligence model and expected performance of the artificial intelligence model.
3. The electronic system of embodiment 2, wherein the difference is described by a difference between a first tutor model and a second tutor model, wherein the first tutor model resembles the actual performance of the artificial intelligence model, and wherein the second tutor model resembles the expected performance of the artificial intelligence model.
4. The electronic system of embodiment 3, wherein the model difference data represents at least one of the following differences between the first tutor model and the second tutor model: a difference between one or more model parameters; a difference between one or more performance metrics; or a difference between one or more output results.
5. The electronic system of embodiment 3, wherein the at least one storage unit and the computer program code are further configured to, via the at least one processing unit, cause the electronic system to perform operations of: training the first tutor model based at least in part on input data and an actual output result of the artificial intelligence model; and training the second tutor model based at least in part on the input data and an expected output result of the artificial intelligence model.
6. The electronic system of embodiment 5, wherein the first tutor model and the second tutor model are based on a same initial tutor model.
7. The electronic system of embodiment 5, wherein the first tutor model and the second tutor model have a complexity higher than a complexity of the artificial intelligence model.
8. The electronic system of embodiment 5, wherein the training of the first tutor model and the training of the second tutor model are initiated in response to the actual performance of the artificial intelligence model not meeting a specific criterion.
9. The electronic system of embodiment 1, wherein the model data characterizing the artificial intelligence model includes at least one of: a model parameter of the artificial intelligence model; or an identifier of the artificial intelligence model.
10. The electronic system of embodiment 1, wherein the artificial intelligence model is a smaller scale model that is generated based on a reduction of a larger scale model.
11. The electronic system of embodiment 10, wherein the updated version is generated based on one of: directly updating the artificial intelligence model based at least in part on the model difference data; or updating the larger scale model based at least in part on the model difference data, and generating the updated version of the artificial intelligence model based on a reduction of the updated larger scale model.
12. The electronic system of embodiment 5, wherein the artificial intelligence model is deployed at a user equipment (UE) in a cellular network.
13. The electronic system of embodiment 12, wherein the first tutor model and the second tutor model are trained at a network device of the cellular network.
14. The electronic system of embodiment 13, wherein the UE receives a training data configuration from the cellular network, the training data configuration specifying the input data, the actual output result and/or the expected output result of the artificial intelligence model for transmission from the UE to the network device.
15. The electronic system of embodiment 13, wherein the artificial intelligence model is configured to predict an optimal beam pair between the UE and a base station of the cellular network, and wherein: the actual output result includes a predicted beam pair that is output by the artificial intelligence model; and the expected output result includes an optimal beam pair that has an optimal beam measurement result.
16. The electronic system of embodiment 5, wherein the electronic system is associated with a vehicle, and the artificial intelligence model is configured to generate a driving decision for the vehicle, and wherein: the input data includes at least sensing data associated with the vehicle; the actual output result includes an automatic driving decision that is generated by the artificial intelligence model based on the environmental sensing data; and the expected output result includes a human driving decision that is made by a driver of the vehicle.
17. The electronic system of embodiment 5, wherein the electronic system is associated with a media device, and the artificial intelligence model is configured to generate a classification of media data of the media device, and wherein: the input data includes the media data; the actual output result includes a predicted classification that is generated by the artificial intelligence model based on the media data; and the expected output result includes a true classification of the media data.
18. An electronic system, comprising: at least one processing unit; and at least one storage unit, the at least one storage unit including computer program code, wherein the at least one storage unit and the computer program code are configured to, via the at least one processing unit, cause the electronic system to perform operations of: sending, to a user system, model data defining an artificial intelligence model; receiving, from the user system, model difference data characterizing a model difference; generating an updated version of the artificial intelligence model based at least in part on the model difference data; and sending updated model data to the user system, the updated model data characterizing the updated version of the artificial intelligence model.
19. The electronic system of embodiment 18, wherein the model difference data represents a difference between actual performance of the artificial intelligence model and expected performance of the artificial intelligence model.
20. The electronic system of embodiment 19, wherein the model difference data represents a model difference between a first tutor model and a second tutor model, wherein the first tutor model resembles the actual performance of the artificial intelligence model deployed at the user system, and wherein the second tutor model resembles the expected performance of the artificial intelligence model deployed at the user system.
21. The electronic system of embodiment 20, wherein the model difference data represents at least one of the following differences between the first tutor model and the second tutor model: a difference between one or more model parameters; a difference between one or more performance metrics; or a difference between one or more output results.
22. The electronic system of embodiment 20, wherein generating the updated version of the artificial intelligence model includes one of: directly updating the artificial intelligence model based at least in part on the model difference data; or updating a larger scale model based at least in part on the model difference data, and generating a smaller scale model based on a reduction of the updated larger scale model, as the updated version of the artificial intelligence model.
23. A method, comprising: receiving, from a model management server, model data characterizing an artificial intelligence model; sending, to the model management server, model difference data characterizing a model difference; and receiving updated model data from the model management server, the updated model data characterizing an updated version of the artificial intelligence model, the updated version being based at least in part on the model difference data.
24. A method, comprising: sending, to a user system, model data defining an artificial intelligence model; receiving, from the user system, model difference data characterizing a model difference; generating an updated version of the artificial intelligence model based at least in part on the model difference data; and sending updated model data to the user system, the updated model data characterizing the updated version of the artificial intelligence model.
25. A computer-readable storage medium having one or more instructions stored thereon, which, when executed by one or more processing circuits of an electronic device, cause the electronic device to perform the method of any of embodiments 23-24.
26. A computer program product, comprising a computer program that, when executed by a processor, performs the method of any of embodiments 23-24.
27. An apparatus comprising means for performing the method of any of embodiments 23-24.

## Claims

1. An electronic system, comprising:
at least one processing unit; and
at least one storage unit, the at least one storage unit including computer program code, wherein the at least one storage unit and the computer program code are configured to, via the at least one processing unit, cause the electronic system to perform operations of:
receiving, from a model management server, model data characterizing an artificial intelligence model;
sending, to the model management server, model difference data characterizing a model difference; and
receiving updated model data from the model management server, the updated model data characterizing an updated version of the artificial intelligence model, the updated version being based at least in part on the model difference data.

2. The electronic system of claim 1, wherein the model difference data represents a difference between actual performance of the artificial intelligence model and expected performance of the artificial intelligence model.

3. The electronic system of claim 2, wherein the difference is described by a difference between a first tutor model and a second tutor model, wherein the first tutor model resembles the actual performance of the artificial intelligence model, and wherein the second tutor model resembles the expected performance of the artificial intelligence model.

4. The electronic system of claim 3, wherein the model difference data represents at least one of the following differences between the first tutor model and the second tutor model:
a difference between one or more model parameters;
a difference between one or more performance metrics; or
a difference between one or more output results.

5. The electronic system of claim 3, wherein the at least one storage unit and the computer program code are further configured to, via the at least one processing unit, cause the electronic system to perform operations of:
training the first tutor model based at least in part on input data and an actual output result of the artificial intelligence model; and
training the second tutor model based at least in part on the input data and an expected output result of the artificial intelligence model.

6. The electronic system of claim 5, wherein the first tutor model and the second tutor model are based on a same initial tutor model.

7. The electronic system of claim 5, wherein the first tutor model and the second tutor model have a complexity higher than a complexity of the artificial intelligence model.

8. The electronic system of claim 5, wherein the training of the first tutor model and the training of the second tutor model are initiated in response to the actual performance of the artificial intelligence model not meeting a specific criterion.

9. The electronic system of claim 1, wherein the model data characterizing the artificial intelligence model includes at least one of:
a model parameter of the artificial intelligence model; or
an identifier of the artificial intelligence model.

10. The electronic system of claim 1, wherein the artificial intelligence model is a smaller scale model that is generated based on a reduction of a larger scale model.

11. The electronic system of claim 10, wherein the updated version is generated based on one of:
directly updating the artificial intelligence model based at least in part on the model difference data; or
updating the larger scale model based at least in part on the model difference data, and generating the updated version of the artificial intelligence model based on a reduction of the updated larger scale model.

12. The electronic system of claim 5, wherein the artificial intelligence model is deployed at a user equipment (UE) in a cellular network.

13. The electronic system of claim 12, wherein the first tutor model and the second tutor model are trained at a network device of the cellular network.

14. The electronic system of claim 13, wherein the UE receives a training data configuration from the cellular network, the training data configuration specifying the input data, the actual output result and/or the expected output result of the artificial intelligence model for transmission from the UE to the network device.

15. The electronic system of claim 13, wherein the artificial intelligence model is configured to predict an optimal beam pair between the UE and a base station of the cellular network, and wherein:
the actual output result includes a predicted beam pair that is output by the artificial intelligence model; and
the expected output result includes an optimal beam pair that has an optimal beam measurement result.

16. The electronic system of claim 5, wherein the electronic system is associated with a vehicle, and the artificial intelligence model is configured to generate a driving decision for the vehicle, and wherein:
the input data includes at least sensing data associated with the vehicle;
the actual output result includes an automatic driving decision that is generated by the artificial intelligence model based on the environmental sensing data; and
the expected output result includes a human driving decision that is made by a driver of the vehicle.

17. The electronic system of claim 5, wherein the electronic system is associated with a media device, and the artificial intelligence model is configured to generate a classification of media data of the media device, and wherein:
the input data includes the media data;
the actual output result includes a predicted classification that is generated by the artificial intelligence model based on the media data; and
the expected output result includes a true classification of the media data.

18. An electronic system, comprising:
at least one processing unit; and
at least one storage unit, the at least one storage unit including computer program code, wherein the at least one storage unit and the computer program code are configured to, via the at least one processing unit, cause the electronic system to perform operations of:
sending, to a user system, model data defining an artificial intelligence model;
receiving, from the user system, model difference data characterizing a model difference;
generating an updated version of the artificial intelligence model based at least in part on the model difference data; and
sending updated model data to the user system, the updated model data characterizing the updated version of the artificial intelligence model.

19. The electronic system of claim 18, wherein the model difference data represents a difference between actual performance of the artificial intelligence model and expected performance of the artificial intelligence model.

20. The electronic system of claim 19, wherein the model difference data represents a model difference between a first tutor model and a second tutor model, wherein the first tutor model resembles the actual performance of the artificial intelligence model deployed at the user system, and wherein the second tutor model resembles the expected performance of the artificial intelligence model deployed at the user system.

21. The electronic system of claim 20, wherein the model difference data represents at least one of the following differences between the first tutor model and the second tutor model:
a difference between one or more model parameters;
a difference between one or more performance metrics; or
a difference between one or more output results.

22. The electronic system of claim 20, wherein generating the updated version of the artificial intelligence model includes one of:
directly updating the artificial intelligence model based at least in part on the model difference data; or
updating a larger scale model based at least in part on the model difference data, and generating a smaller scale model based on a reduction of the updated larger scale model, as the updated version of the artificial intelligence model.

23. A method, comprising:
receiving, from a model management server, model data characterizing an artificial intelligence model;
sending, to the model management server, model difference data characterizing a model difference; and
receiving updated model data from the model management server, the updated model data characterizing an updated version of the artificial intelligence model, the updated version being based at least in part on the model difference data.

24. A method, comprising:
sending, to a user system, model data defining an artificial intelligence model;
receiving, from the user system, model difference data characterizing a model difference;
generating an updated version of the artificial intelligence model based at least in part on the model difference data; and
sending updated model data to the user system, the updated model data characterizing the updated version of the artificial intelligence model.

25. A computer-readable storage medium having one or more instructions stored thereon, which, when executed by one or more processing circuits of an electronic device, cause the electronic device to perform the method of any of claims 23-24.

26. A computer program product, comprising a computer program that, when executed by a processor, performs the method of any of claims 23-24.

27. An apparatus comprising means for performing the method of any of claims 23-24.
